# EUROPEAN PATENT APPLICATION

(11) **EP 4 353 965 A1**
(43) Date of publication of application: **17.04.2024**
(21) Application number: 22201627.1
(22) Date of filing: 14.10.2022
(51) Int. Cl.: F03D 1/06, F03D 13/10

(54) **METHOD OF DISASSEMBLING A SEGMENTED BLADE FOR A WIND TURBINE**

(71) Applicant: LM Wind Power A/S, 6000 Kolding (DK)
(72) Inventor: Bharadwaj, Keshava, 562111 Bangalore (IN)
(74) Representative: Zimmermann & Partner Patentanwälte mbB

(57) **Abstract**

A method (100) of disassembling a segmented blade (10) for a wind turbine (2), the segmented blade (10) including a first segment (40) and a second segment (50), the method (100) comprising: providing the segmented blade (10) in an assembled state, wherein a connecting member (54) of the second segment (50) extends into the first segment (40); removing the connecting member (54) partially from the first segment (40), wherein removing the connecting member (54) comprises exposing a first region (58) of the connecting member (54); positioning a disassembly tool (60) comprising a tool base (66) and a guiding device (80) connected to the tool base (66), wherein the tool base (66) is positioned below the connecting member (54), and wherein a top portion (82) of the guiding device (80) is positioned in the first region (58) and above the connecting member (54) to limit a mobility of the connecting member (54); and removing the connecting member (54) entirely from the first segment (40) after positioning the disassembly tool (60).

## Description

### FIELD

The present subject matter generally relates to segmented rotor blades for wind turbines, particularly to method of disassembling a segmented blade for a wind turbine, to a disassembly tool configured for disassembling a segmented blade for a wind turbine, and to a rotor blade set.

### BACKGROUND

Wind power is considered one of the cleanest, most environmentally friendly energy sources presently available, and wind turbines have gained increased attention in this regard. A modern wind turbine typically includes a tower, generator, gearbox, nacelle, and one or more rotor blades. The rotor blades capture kinetic energy from wind using known foil principles and transmit the kinetic energy through rotational energy to turn a shaft coupling the rotor blades to a gearbox, or if a gearbox is not used, directly to the generator. The generator then converts the mechanical energy to electrical energy that may be deployed to a utility grid.

The size of rotor blades contributes to the energy efficiency of wind turbines. In particular, an increase in rotor blade size can increase the energy production of a wind turbine. The economic benefits of increased wind turbine sizes or rotor blade sizes must be weighed against respective costs of manufacturing, transporting, assembly or repair of the wind turbines. One strategy for reducing the costs of pre-forming, transporting, and erecting wind turbines having rotor blades of increasing sizes is to manufacture the rotor blades in blade segments. The blade segments may be assembled to form the rotor blade after, for example, the individual blade segments are transported to an erection location.

During manufacturing of the blade segments and particularly prior to transporting the blade segments to the erection location, the blade segments may already be assembled at the blade manufacturing site, e.g. in a blade manufacturing hall. For example, the blade segments may be assembled for finishing operations on the blade surface and/or for testing the rotor blade or components thereof such as a joint between the blade segments. However, moving the blade segments relative to one another at a manufacturing site particularly poses risks of injury to the personnel operating at the manufacturing site and/or risks of damaging the blade segments.

Accordingly, the present disclosure is directed to a method of disassembling a segmented blade for a wind turbine, to a disassembly tool and a rotor blade set that can provide a safe, fast and/or cost-efficient disassembly of a segmented blade for a wind turbine.

### BRIEF DESCRIPTION

Aspects and advantages of the invention will be set forth in part in the following description, or may be obvious from the description, or may be learned through practice of the invention.

In one aspect, the present disclosure is directed to a method of disassembling a segmented blade for a wind turbine, the segmented blade including a first segment and a second segment. The method includes providing the segmented blade in an assembled state, wherein a connecting member of the second segment extends into the first segment. The method further includes removing the connecting member partially from the first segment, wherein removing the connecting member comprises exposing a first region of the connecting member. The method further includes positioning a disassembly tool comprising a tool base and a guiding device connected to the tool base, wherein the tool base is positioned below the connecting member, and wherein a top portion of the guiding device is positioned in the first region and above the connecting member to limit a mobility of the connecting member. The method includes removing the connecting member entirely from the first segment after positioning the disassembly tool. It should be understood that the method may further include any of the additional steps and/or features as described herein.

In another aspect, the present disclosure is directed to a disassembly tool configured for disassembling a segmented blade for a wind turbine, the segmented blade including a first segment and a second segment, the second segment including a connecting member extending into the first segment. The disassembly tool includes a tool base to be positioned below the connecting member while the connecting member is being removed from the first segment. The disassembly tool further includes a guiding device connected to the tool base, wherein the guiding device includes a top portion configured to be positioned above the connecting member to limit a mobility of the connecting member while the connecting member is being removed from the first segment. It should be understood that the disassembly tool may further include any of the additional features as described herein.

In yet another aspect, the present disclosure is directed to a rotor blade set. The rotor blade set includes a first segment of a segmented blade for a wind turbine. The rotor blade set includes a second segment of a segmented blade for a wind turbine, the second segment including a connecting member configured to extend into the first segment in an assembled state of the segmented blade. The rotor blade set further includes a disassembly tool configured for disassembling the segmented blade according to embodiments described herein.

These and other features, aspects and advantages of the present invention will be further supported and described with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of a wind turbine;
FIG. 2 illustrates a schematic view of a segmented blade for a wind turbine;
FIGS. 3A-B illustrate schematic views of a segmented blade for a wind turbine in an assembled state and in a disassembled state;
FIG. 4 illustrates a flow diagram of a method of disassembling a segmented blade according to embodiments of the present disclosure;
FIGS. 5A-B illustrate schematic views of a disassembly tool used to disassemble a segmented blade according to embodiments;
FIG. 6 illustrates a schematic view of a disassembly tool according to a further embodiment;
FIG. 7 illustrates a schematic view of the disassembly tool of FIG. 6 after removing a connecting member of a second segment from a first segment; and
FIG. 8 illustrates a perspective view of a disassembly tool according to an exemplary embodiment; and
FIG. 9 illustrates a perspective view of a disassembly tool according to a further exemplary embodiment.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

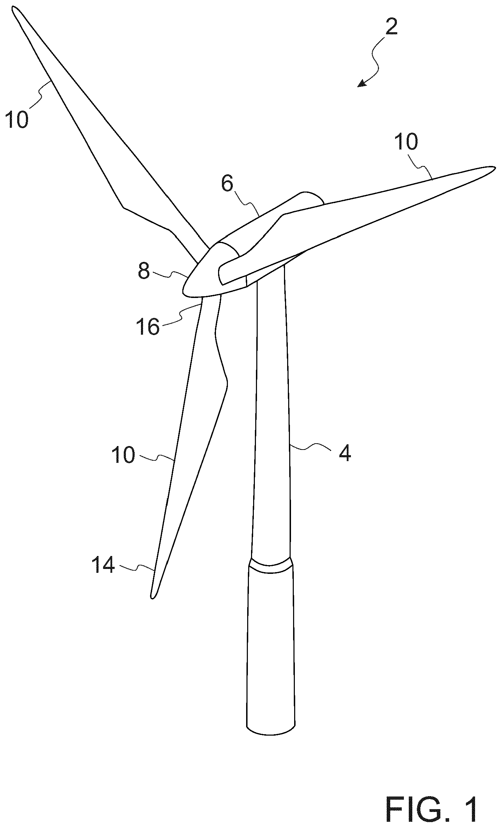

FIG. 1 illustrates a modern upwind wind turbine 2 with a tower 4, a nacelle 6 and a rotor with a substantially horizontal rotor shaft. The rotor includes a hub 8 and at least one rotor blade 10 extending radially from the hub 8, each blade 10 having a blade root 16 nearest the hub 8 and a blade tip 14 furthest from the hub 8. For example, as shown in FIG. 1, the rotor may include three rotor blades 10.

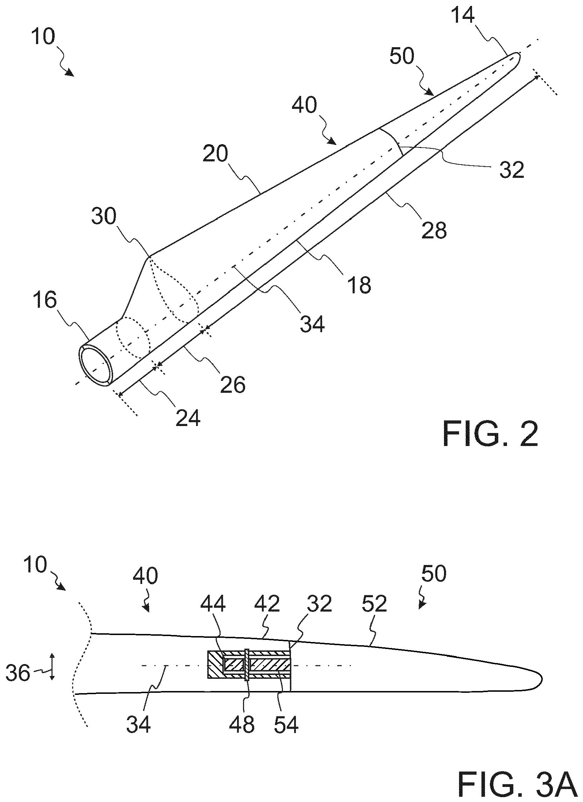

Fig. 2 shows a schematic view of a segmented blade 10 for a wind turbine 2 in an assembled state of the segmented blade 10. The segmented blade 10 includes a root region 24 closest to the hub 8, an airfoil region 28 furthest away from the hub 8 and a transition region 26 between the root region 24 and the airfoil region 28. The blade 10 includes a leading edge 18 facing the direction of rotation of the blade 10, when the blade 10 is mounted to the hub 8, and a trailing edge 20 facing the opposite direction of the leading edge 18.

The airfoil region 28 (or profiled region) has a blade shape configured for generating lift, whereas the root region 24 due to structural considerations may have a substantially circular or elliptical cross-section, which for instance makes it easier and safer to mount the blade 10 to the hub 8. The diameter (or the chord) of the root region 24 may be essentially constant along the entire root region 24. The transition region 26 has a transitional profile gradually changing from the circular or elliptical shape of the root region 24 to the airfoil profile of the airfoil region 28. The chord length of the transition region 26 typically increases with increasing distance from the hub 8. The airfoil region 28 has an airfoil profile with a chord extending between the leading edge 18 and the trailing edge 20 of the blade 10. The width of the chord decreases with increasing distance from the hub 8. A shoulder 30 of the blade 10 is defined as the position, where the blade 10 has its largest chord length. The shoulder 30 is typically provided at the boundary between the transition region 26 and the airfoil region 28.

According to embodiments of the present disclosure, a segmented blade 10 includes at least two segments including a first segment 40 and a second segment 50. The segmented blade 10 may include exactly two segments. For example, FIG. 2 illustrates a first segment 40 and a second segment 50 being joined at a split line 32 of the segmented blade 10. In further embodiments, the segmented blade can include more than two segments, for example exactly three segments or exactly four segments. The segmented blade 10 can extend along a longitudinal axis 34 of the segmented blade 10 in spanwise direction from the blade root 16 of the segmented blade 10 to the blade tip 14 of the segmented blade 10.

In embodiments, the first segment 40 is a root-side segment of the segmented blade 10 and the second segment 50 is a tip-side segment of the segmented blade 10. In particular the second segment 50 can be joined to the first segment 40 such that the second segment 50 extends from the first segment 40 towards a blade tip 14 of the segmented blade 10. In some embodiments, the first segment 40 is a root segment of the segmented blade 10. In particular, the first segment 40 can include the blade root 16 of the segmented blade 10. The first segment 40 may be configured to be connected to the rotor hub 8. In some embodiments, the second segment 50 is a tip segment including the blade tip 14. For example, FIG. 2 illustrates the first segment 40 as a root segment and the second segment 50 as a tip segment.

According to embodiments, the first segment 40 and the second segment 50 may be joined via a blade joint to provide the segmented blade 10 in the assembled state. The second segment 50 includes a connecting member 54, which extends into the first segment 40 in the assembled state of the segmented blade 10. In the assembled state, a first shell 42 of the first segment 40 may at least essentially surround at least a portion of the connecting member 54 in a circumferential direction around the longitudinal axis 34. The first shell 42 of the first segment 40 may particularly provide an outer skin of the first segment 40. A second shell 52 of the second segment 50 can provide an outer skin of the second segment 50. In the airfoil region 28 of the segmented blade 10, the first shell 42 and the second shell 52 together may particularly provide the aerodynamic surface of the segmented blade 10 for generating lift. In the assembled state, the first shell 42 and the second shell 52 may abut at the split line 32, as illustrated for example in FIG. 2. In a disassembled state of the segmented blade 10, the connecting member 54 may extend out of the second shell 52, particularly out of the second shell 52 in a direction along the longitudinal axis 34, more particularly in a direction towards the blade root 16.

In some embodiments, the first segment 40 includes a receiver 44. The receiver 44 can include a receiving space 45 for receiving the connecting member 54 of the second segment 50. The receiver 44 can be arranged within the first shell 42 of the first segment 40.

According to embodiments, the connecting member 54 includes a beam extending in a direction of the longitudinal axis 34. In particular, the connecting member 54 may include an extension of a structural member of the second segment 50 beyond the second shell 52. The connecting member 54 may particularly include an extension of a spar cap of the second segment 50 and/or of a shear web of the second segment 50. For example, the connecting member 54 may be an extended sparbeam of the second segment 50, the sparbeam particularly including extended spar caps and extended shear webs. In embodiments, the connecting member 54 is configured to be inserted into the receiving space 45 of a receiver 44 of the first segment 40.

According to some embodiments, the first segment 40 and the second segment 50 may be joined via a pin joint. In particular, each of the connecting member 54 and the receiver 44 may include one or more pinhole. In the assembled state, the connecting member 54 may be locked with respect to the receiver 44 via a pin 48 inserted through the pinholes of the connecting member 54 and the receiver.

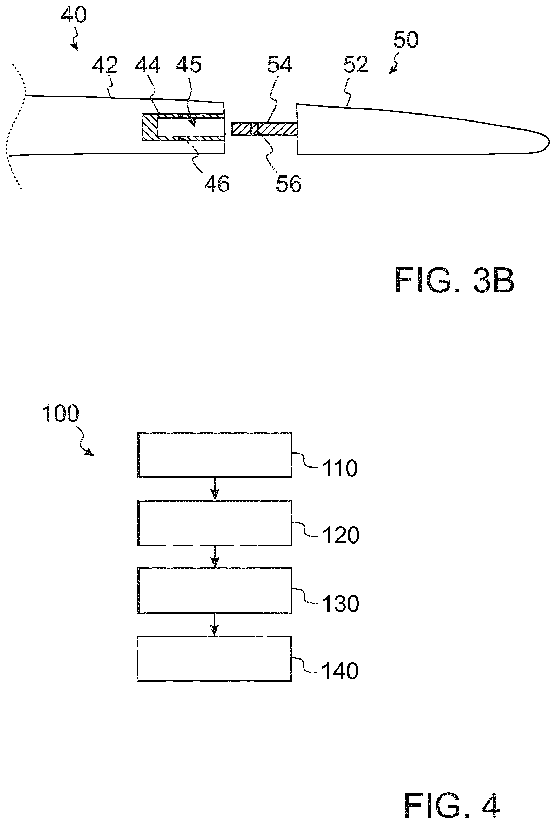

For example, FIGS. 3A and 3B schematically illustrate a segmented blade 10 according to embodiments in an assembled state (FIG. 3A) and in a disassembled state (FIG. 3B), wherein the longitudinal axis 34 and a chordwise direction 36 lie in the plane of FIGS. 3A and 3B. FIGS. 3A and 3B particularly illustrate joint components of the segmented blade 10, whereas other blade components are not shown for clarity. In the assembled state, the second shell 52 of the second segment 50 abuts the first shell 42 of the first segment 40. A connecting member 54 of the second segment 50, in FIGS. 3A and 3B an extended sparbeam of the second segment 50, extends into a receiving space 45 of a receiver 44 of the first segment 40. In FIG. 3A, the first segment 40 and the second segment 50 are locked in position by a pin 48 inserted through pinholes 46 of the receiver 44 and through a pinhole 56 of the connecting member 54. Alternatively or additionally, in further embodiments, the first segment and the second segment may be locked in position by a connection other than a pin joint, e.g. via a flange connection or a bolted connection. In yet further embodiments, the second segment may include more than one connecting member extending into the first segment in an assembled state of the segmented blade.

In FIG. 3B, the segmented blade 10 is shown in a disassembled state, wherein the second segment 50 is entirely removed from the first segment 40. In particular, the second segment 50 is removed in an axial direction from the first segment 40. The term "axial" as used herein particularly refers to the longitudinal axis 34 of the segmented blade.

In the process of manufacturing a segmented blade, the first segment and the second segment may be assembled, for example to test the joint between the first segment and the second segment, or e.g. for finishing the skin of the segmented blade at the split line of the segmented blade. Before transport of the segmented blade, the segmented blade may again be disassembled by separating the first segment and the second segment. In particular, the second segment may be moved in an axial direction relative to the first segment to remove the connecting member from the first segment. When separating the first segment and the second segment, one or both segments may swing relative to the other segment, particularly when using a crane such as an overhead crane of a manufacturing hall for separating the segments. A swinging of one or more segments may damage the segments or cause injury to personnel. The swinging might be reduced or prevented by manual intervention of an operator, which however could put said operator at risk of injuries. Accordingly, it may be beneficial to reduce or avoid manual intervention when removing the connecting member, to reduce the risks of injuries to personnel and/or to reduce the risks of damage to equipment or blade segments during the disassembly of a segmented blade. Further, particularly considering the demand on cranes and space at a manufacturing site, there may be a need to perform a disassembly in a fast and/or cost-efficient manner.

Methods and disassembly tools according to embodiments of the present disclosure may particularly reduce a mobility of a second segment of a segmented blade during disassembly of the segmented blade, for example to reduce the risks of injuries and/or risks of damage to the blade segments or equipment.

FIG. 4 illustrates a flow diagram of a method 100 of disassembling a segmented blade 10 for a wind turbine 2. According to embodiments, the method 100 includes providing (block 110) the segmented blade 10 in an assembled state. The segmented blade 10 may be configured according to embodiments described herein. In the assembled state, a connecting member 54 of the second segment 50 extends into the first segment 40. The first segment 40 and the second segment 50 may be manufactured separately prior to assembling the segmented blade 10. The segmented blade 10 may be provided in the assembled state at a manufacturing site, particularly prior to transporting the first segment 40 and the second segment 50 to an erection site of the wind turbine 2.

According to some embodiments, the segmented blade 10 may be provided in the assembled state in an at least essentially horizontal orientation. In particular, the longitudinal axis 34 of the segmented blade 10 may be oriented at least essentially horizontally. The terms "horizontal", "vertical", "up", "down", "above, "below", "top" or "bottom" are particularly to be understood with respect to gravity. In some embodiments, the chord of the segmented blade 10 may be oriented at least essentially vertically. For example, the leading edge 18 may point in a downward direction and the trailing edge 20 may point in an upward direction.

In embodiments, providing the segmented blade 10 includes holding the segmented blade 10 using one or more holding devices. The one or more holding devices may be configured to move a segment of the segmented blade 10 relative to the other segment. In particular, the first segment 40 may be held using a first holding device 98 such as a blade support cart. The second segment 50 may be held using a second holding device 96. For example, the second holding device 96 may include a crane such as an overhead crane of a manufacturing site, particularly an overhead crane of a manufacturing hall. The second holding device 96 may include a connecting device to connect the second segment 50 to a crane hook of the overhead crane.

According to embodiments, the method 100 includes removing (block 120) the connecting member 54 partially from the first segment 40. In particular, the second segment 50 may be moved relative to the first segment 40, particularly in an axial direction away from the first segment 40. For example, the second segment 50 may be moved using the second holding device 96 such as an overhead crane. In embodiments, removing the connecting member 54 includes exposing a first region 58 of the connecting member 54. The first region 58 may be exposed such that the first region 58 is accessible from outside the segmented blade 10. The first region 58 may be exposed such that the first region 58 is accessible axially between a first shell 42 of the first segment 40 and a second shell 52 of the second segment 50. The first region 58 may be an axial region of the connecting member 54.

According to embodiments of the present disclosure, a disassembly tool 60 configured for disassembling a segmented blade 10 is provided. In embodiments, the disassembly tool 60 includes a tool base 66 to be positioned below the connecting member 54 while the connecting member 54 is being removed from the first segment 40, particularly after the connecting member 54 has been partially removed from the first segment 40 and prior to entirely removing the connecting member 54 from the first segment 40.

According to embodiments, the disassembly tool 60 includes a guiding device 80 connected to the tool base 66. The guiding device 80 can include a top portion 82 configured to be positioned above the connecting member 54. The top portion 82 may be positioned above the connecting member 54 to limit a mobility of the connecting member 54 while the connecting member 54 is being removed from the first segment 40, particularly a mobility of the connecting member 54 in an upward direction.

In embodiments, the disassembly tool 60 is configured to be moved on a support surface 12 such as a floor, e.g. a floor of a manufacturing hall. For example, the disassembly tool 60 can include wheels 72 for moving the disassembly tool 60, the wheels 72 particularly being connected to the tool base 66, particularly at the bottom of the tool base 66. The disassembly tool 60 can further include brakes for braking the wheels. The guiding device 80 may be positioned on top of the tool base 66.

In embodiments, the method 100 includes positioning (block 130) the disassembly tool 60, particularly after removing the connecting member 54 partially from the first segment 40. The tool base 66 may be positioned below the connecting member 54. The top portion 82 of the guiding device 80 is positioned in the first region 58 and above the connecting member 54 to limit a mobility of the connecting member 54, particularly a mobility of the connecting member 54 in a vertical direction and more particularly in an upward direction. More specifically, the top portion 82 of the guiding device 80 may be positioned directly vertically above the connecting member 54. The top portion 82 may be positioned in a vertical region between the connecting member 54 and an upper end of the first shell 42. In some embodiments, the top portion 82 may be in contact with an upper surface of the connecting member 54.

According to some embodiments, the guiding device 80 includes a lateral portion 86. The lateral portion 86 may connect the tool base 66 and the top portion 82 of the guiding device 80. In particular, the lateral portion 86 may be arranged in a vertical region from the top portion 82 to the tool base 66. The lateral portion 86 may be connected to each of the top portion 82 and the tool base 66. In embodiments, the lateral portion 86 is configured to be positioned laterally with respect to the connecting member 54 while the connecting member 54 is being removed from the first segment 40. The lateral portion 86 may be configured to limit a mobility of the connecting member54 in a horizontal direction perpendicular to the longitudinal axis 34 of the segmented blade 10.

In embodiments, the disassembly tool 60 has a first horizontal axis 62, wherein particularly the first horizontal axis 62 is to be aligned with the longitudinal axis 34 of the segmented blade when positioning the disassembly tool 60. The disassembly tool 60 may have a second horizontal axis 64 perpendicular to the first horizontal axis 62. The lateral portion 86 may be offset in a direction of the second horizontal axis 64 relative to a center of the top portion 82. Positioning the disassembly tool 60 may include positioning the lateral portion 86 in the first region 58 of the connecting member 54 and laterally with respect to the connecting member 54.

In some embodiments, the guiding device 80 includes a bottom portion 84 to be positioned below the connecting member 54 while removing the connecting member 54 from the first segment 40. The bottom portion 84 may be particularly configured to limit a mobility of the connecting member 54 in a downward direction while removing the connecting member 54. Positioning the disassembly tool 60 may include positioning the bottom portion 84 of the guiding device 80 in the first region of the connecting member 54 and below the connecting member 54.

In some embodiments, positioning the disassembly tool 60 includes immobilizing the disassembly tool 60, particularly after positioning the tool base 66 and/or the guiding device 80. The disassembly tool 60 may particularly be immobilized by braking wheels 72 of the disassembly tool 60, particularly using brakes of the disassembly tool 60 for the wheels 72.

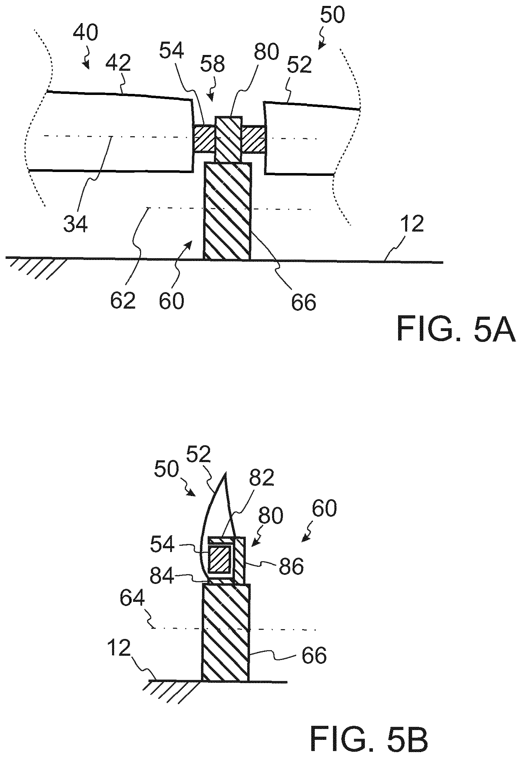

FIGS. 5A-B illustrate schematic views of an embodiment of a disassembly tool 60 used for disassembling a segmented blade 10 including a first segment 40, particularly a root segment, and a second segment 50, particularly a tip segment. The first segment 40 and the second segment 50 are held by holding devices (not shown) as described herein. FIGS. 5A-B show the segmented blade 10 after partially removing (block 120) the connecting member 54 from the first segment 40 and after positioning (block 130) the disassembly tool 60. More specifically, FIG. 5A shows a view onto one of the pressure side or the suction side of the segmented blade 10. FIG. 5B shows a view along the longitudinal axis 34 towards the blade tip 14, wherein the first segment 40 is not shown for clarity. In FIG. 5A, the second segment 50 is positioned relative to the first segment 40 such that the connecting member 54 is partially removed from the first segment 40 and a first region 58 of the connecting member 54 is exposed. The disassembly tool 60 includes a tool base 66 positioned below the connecting member 54 and on a support surface 12, particularly a floor of a manufacturing site. The disassembly tool 60 is further positioned such that the guiding device 80 of the disassembly tool 60 is positioned in the first region 58. In particular, a top portion 82 of the guiding device 80 is positioned above the connecting member 54, a bottom portion 84 is positioned below the connecting member 54 and a lateral portion 86 is positioned laterally with respect to the connecting member 54. The guiding device 80 limits the mobility of the connecting member 54 in an upward direction, in a downward direction and in a lateral direction.

In embodiments, the method 100 includes removing (block 140) the connecting member 54 entirely from the first segment 40 after positioning the disassembly tool 60. The connecting member 54 can be removed in an axial direction from the first segment 40, particularly such that the connecting member 54 is removed out of the first segment 40. For example, the connecting member 54 may be removed from a receiver 44 of the first segment 40 and/or out of the first shell 42 of the first segment 40.

After removing the connecting member 54 entirely from the first segment 40, the mobility of the connecting member 54 is limited by the disassembly tool 60, particularly by the guiding device 80. The guiding device 80 may guide the connecting member 54 after the connecting member 54 is removed from the first segment 40. In some embodiments, removing the connecting member 54 entirely from the first segment 40 includes sliding the connecting member 54 along the top portion 82 of the guiding device 80. In further embodiments the connecting member 54 may slide along the top portion 82, the bottom portion 84 and/or the lateral portion 86 of the guiding device 80. The guiding device 80 may avoid or reduce a swinging motion of the connecting member 54 or of the second segment 50. In particular, the guiding device 80 can limit an upward movement of the connecting member 54, a downward movement and/or a lateral movement. For instance, a swinging motion may occur when using a crane as the second holding device 96 for holding and moving the second segment 50. Guiding the connecting member 54 while separating the segments may particularly reduce risks of injury or damage during blade disassembly.

According to some embodiments of the present disclosure, the disassembly tool 60 further includes a support device 90. The support device 90 may be configured to be brought into contact with the first segment 40 of the segmented blade 10 while the connecting member 54 is being removed from the first segment 40. In embodiments, the support device 90 is connected to the tool base 66. In particular, the support device 90 may be positioned on the tool base 66 and offset along the first horizontal axis 62 of the disassembly tool 60 relative to the guiding device 80. The support device 90 may be positioned on the tool base 66 offset in a vertical direction relative to the guiding device 80, particularly lower than the guiding device 80. The tool base 66 may extend in a direction of the first horizontal axis 62 of the disassembly tool 60 so as to support the guiding device 80 and the support device 90.

In some embodiments, positioning (block 130) the disassembly tool 60 includes bringing the support device 90 into contact with the first segment 40. Positioning the disassembly tool 60 can include positioning the support device 90 below the first segment 40 before bringing the support device 90 into contact with the first segment 40. Bringing the support device 90 into contact with the first segment 40 may include applying a force to the first segment 40 using the support device 90, particularly an upward force. Applying a force to the first segment 40 may clamp the disassembly tool 60 between the first segment 40 and a support surface 12 on which the disassembly tool 60 is positioned, particularly for securing or immobilizing the disassembly tool 60 with respect to the first segment 40.

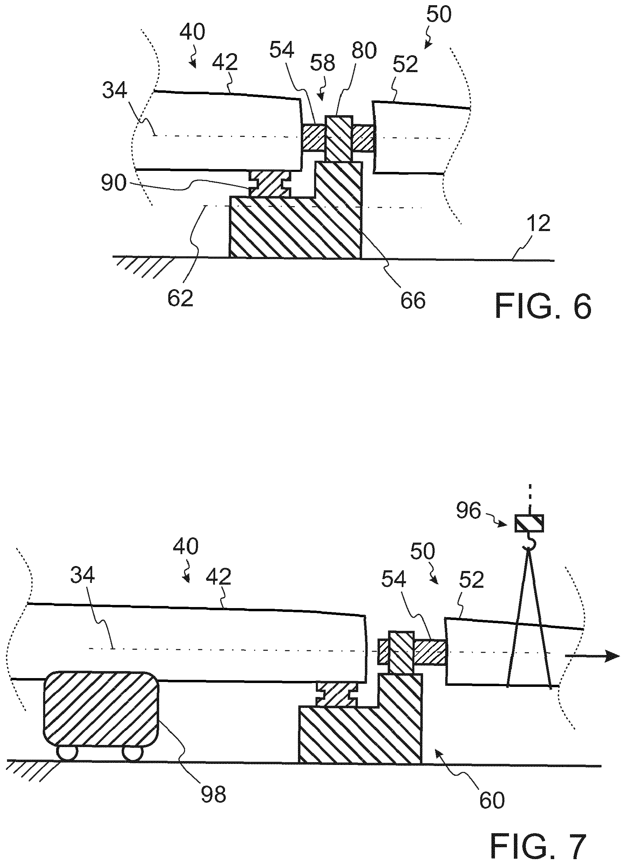

For example, FIG. 6 illustrates a disassembly tool 60 having a tool base 66 and a guiding device 80, the guiding device 80 being positioned in the first region 58 of the connecting member 54 so as to guide the connecting member 54 during the removal of the connecting member 54 according to embodiments described herein. In FIG. 6, the disassembly tool 60 further includes a support device 90, which is arranged offset along the first horizontal axis 62 of the disassembly tool 60 relative to the guiding device 80 and lower than the guiding device 80. In particular, the support device 90 is arranged such that the support device 90 can be brought into contact with the first segment 40, while the guiding device 80 guides the connecting member 54 during the removal of the connecting member 54 from the first segment 40.

FIG. 7 shows the segmented blade and the disassembly tool 60 according to FIG. 6, but after the connecting member 54 has been removed entirely from the first segment 40. In FIG. 7, the first segment 40 is held by a first holding device 98, particularly a blade support cart. The second segment 50 is held by a second holding device 96, particularly an overhead crane of a manufacturing hall. After removing the connecting member 54 from the first segment 40 by moving the second segment 50 in an axial direction away from the first segment 40, the connecting member 54 is still guided by the guiding device 80 of the disassembly tool 60. The connecting member 54 may for example slide along the top portion 82 of the guiding device 80 which limits the mobility of the connecting member 54 in an upward direction. The connecting member 54 can particularly be prevented from swinging in one or more directions after exiting the first segment 40.

In embodiments, the support device 90 includes a lifting device 94 and a contact member 92. The lifting device 94 may be connected to the tool base 66. In particular, the lifting device 94 may be mounted onto or into the tool base 66. The lifting device 94 may be configured for lifting the contact member 92 in a vertical direction relative to the tool base 66. The lifting device 94 may be configured to move the contact member 92 in an upward direction and to move the contact member 92 in a downward direction depending on an operation of the lifting device 94. The lifting device 94 can include or be a jack such as a mechanical jack, a hydraulic jack or a pneumatic jack. In embodiments, bringing the support device 90 into contact with the first segment 40 includes lifting up the contact member 92 using the lifting device 94 such that the contact member 92 contacts the first segment 40. Lifting the contact member 92 can include jacking up the contact member 92. Bringing the contact member 92 into contact with the first segment 40 can stabilize and/or immobilize the disassembly tool 60, particularly against a movement of the disassembly tool 60 relative to the first segment 40. In particular, by pressing the contact member 92 to the first segment 40 using an upward force provided by the lifting device 94, the disassembly tool 60 can be clamped between the first segment 40 and a support surface 12 below the disassembly tool 60.

According to some embodiments, the contact member 92 may include one or more contact surfaces for contacting the first segment 40. In particular, the one or more contact surfaces may extend in a direction of the first horizontal axis 62 of the disassembly tool 60. In some embodiments, the contact member 92 may for example include at least two contact surfaces, wherein two of the contact surfaces are angled with respect to each other. For example, the contact surfaces may be angled so as to receive an edge of the first segment 40 between the angled contact surfaces, particularly the leading edge 18 of the first segment 40.

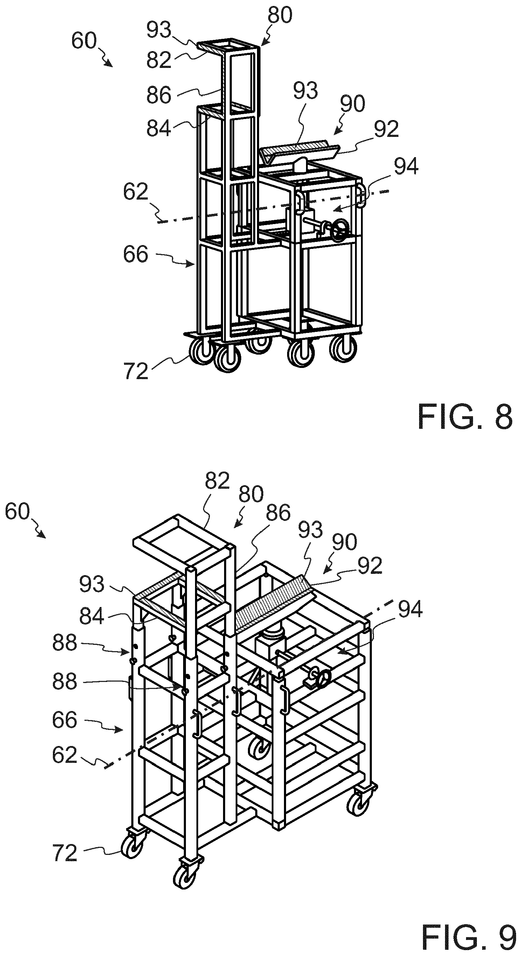

For example, each of FIGS. 8 and 9 illustrates an embodiment of a disassembly tool 60 according to the present disclosure, each including a tool base 66, a guiding device 80 connected to the tool base 66, and a support device 90 connected to the tool base 66. The support device 90 includes a lifting device 94, specifically a jack, to lift a contact member 92 of the support device 90. The contact member 92 has a V-shaped cross-section with contact surfaces angled towards each other to receive the leading edge 18 of a first segment 40. In embodiments, the contact member 92 may be in a lower position before positioning (block 130) of the disassembly tool 60. After positioning the support device 90 below the first segment 40, the contact member 92 may be lifted in an upward direction using the lifting device 94 to contact the first segment 40 and particularly for applying an upward force to the first segment 40 to stabilize the disassembly tool 60. After removing the second segment 50 entirely from the first segment 40, the contact member 92 may be lowered using the lifting device 94, particularly to free the disassembly tool 60 before removing the disassembly tool 60 from the first segment 40.

In some embodiments, the guiding device 80 is rigidly connected to the tool base 66. For example, the bottom portion 84 and/or the lateral portion 86 of the guiding device 80 may be directly and rigidly connected to the tool base 66, as illustrated e.g. in FIG. 8.

According to further embodiments, the guiding device 80 includes a height adjustment device 88 for adjusting a height of the top portion 82, particularly for adjusting a height of the top portion 82, of the bottom portion 84 and/or of the lateral portion 86. The height adjustment device 88 may adjustably connect the top portion 82, the bottom portion 84 and/or the lateral portion 86 to the tool base 66. In some embodiments, the height adjustment device 88 includes telescopic tubes, which may be locked in two or more vertical positions using a locking device. For example, the locking device may include corresponding holes in the telescopic tubes for locking the telescopic tubes at the two or more vertical positions using a locking pin of the locking device. In embodiments, the method 100 further includes adjusting the height of the top portion 82, of the bottom portion 84 and/or of the lateral portion 86, particularly before positioning (block 130) the disassembly tool 60. Adjusting a height of the guiding device or of portions thereof can particularly enable using the disassembly tool 60 for disassembling more than one type of segmented blade 10.

For example, the guiding device 80 shown in FIG. 9 includes a height adjustment device 88 with four telescopic tubes. Using the telescopic tubes, the top portion 82, the bottom portion 84 and the lateral portion 86 may be positioned in a vertical direction and locked at two distinct vertical positions for use with two different types of segmented blades.

In some embodiments, the top portion 82, the bottom portion 84, the lateral portion 86 and/or the contact member 92 may be lined with a liner 93 or a coating, particularly an abrasion-resistant liner or an abrasion-resistant coating. The liner 93 or coating may avoid or reduce abrasion or damage to the connecting member 54 and/or to the first shell 42, particularly when the connecting member 54 and/or the first shell 42 come into contact with the disassembly tool 60. For example, the disassembly tools of FIGS 8 and 9 include abrasion-resistant liners 93 on the guiding device 80 and on the contact member 92.

In some embodiments, the disassembly tool 60 includes a scaffold structure. In particular, the tool base 66 and/or the guiding device 80 may include a scaffold structure or may be constructed as a scaffold structure. For example, the scaffold structure may include a tubular scaffold structure. Embodiments including a scaffold structure may particularly provide a stable, lightweight and/or inexpensive disassembly tool 60. For example, the disassembly tools 60 of FIGS. 8 and 9 each include a scaffold structure for the tool base 66 and the guiding device 80. The disassembly tools 60 of FIGS. 8 and 9 further include wheels 72 to facilitate moving the disassembly tools 60 to position the disassembly tools 60.

According to some embodiments, the tool base 66 may have a first width in a direction of the second horizontal axis 64 of the disassembly tool 60 and a second width in the direction of the second horizontal axis 64. In particular, a first width of the tool base 66 in a region of the support device 90 may be different from a second width of the tool base 66 in a region of the guiding device 80. In particular, the first width may be larger than the second width. A large width of the region of the support device 90 may particularly provide a high stability of the disassembly tool 60 under load during removal of the connecting member 54. For example, in each of FIGS. 8 and 9, the first width of the tool base 66 in a region of the support device 90 is larger than the second width of the tool base 66 in a region of the guiding device 80.

Embodiments of the present disclosure may advantageously guide the connecting member of a segmented blade when disassembling a segmented blade. A manual intervention by operating personnel during the removal of the connecting member may be reduced. Further, injuries to personnel and/or damage to equipment or blade segments may be avoided. Some embodiments of the disassembly tool may advantageously be provided as a light and/or mobile tool, particularly facilitating its use in the disassembly procedure. According to embodiments, a disassembly of a segmented blade may be performed in a fast and/or cost-efficient manner.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method (100) of disassembling a segmented blade (10) for a wind turbine (2), the segmented blade (10) including a first segment (40) and a second segment (50), the method (100) comprising:
- providing the segmented blade (10) in an assembled state, wherein a connecting member (54) of the second segment (50) extends into the first segment (40);
- removing the connecting member (54) partially from the first segment (40), wherein removing the connecting member (54) comprises exposing a first region (58) of the connecting member (54);
- positioning a disassembly tool (60) comprising a tool base (66) and a guiding device (80) connected to the tool base (66), wherein the tool base (66) is positioned below the connecting member (54), and wherein a top portion (82) of the guiding device (80) is positioned in the first region (58) and above the connecting member (54) to limit a mobility of the connecting member (54); and
- removing the connecting member (54) entirely from the first segment (40) after positioning the disassembly tool (60).

2. The method (100) of claim 1, wherein the disassembly tool (60) further comprises a support device (90), and wherein positioning the disassembly tool (60) comprises bringing the support device (90) into contact with the first segment (40).

3. The method (100) of claim 2, wherein positioning the disassembly tool (60) comprises positioning the support device (90) below the first segment (40) before bringing the support device (90) into contact with the first segment (40).

4. The method (100) of any one of claims 2 or 3, wherein the support device (90) comprises a lifting device (94) and a contact member (92), and wherein bringing the support device (90) into contact with the first segment (40) comprises lifting up the contact member (92) using the lifting device (94) such that the contact member (92) contacts the first segment (40).

5. The method (100) of any one of the preceding claims, wherein positioning the disassembly tool (60) comprises positioning a bottom portion (84) of the guiding device (80) in the first region (58) and below the connecting member (54) to limit a mobility of the connecting member (54) in a downward direction.

6. The method (100) of any one of the preceding claims, wherein removing the connecting member (54) entirely from the first segment (40) comprises sliding the connecting member (54) along the top portion (82) of the guiding device (80).

7. The method (100) of any one of the preceding claims, wherein the guiding device (80) comprises a height adjustment device (88) for adjusting a height of the top portion (82), and wherein the method (100) further comprises adjusting the height of the top portion (82) before positioning the disassembly tool (60).

8. The method (100) of any one of the preceding claims, wherein the disassembly tool (60) further comprises wheels (72) for moving the disassembly tool (60) and brakes for braking the wheels (72), and wherein positioning the disassembly tool (60) comprises immobilizing the disassembly tool (60) by braking the wheels (72) using the brakes.

9. The method (100) of any one of the preceding claims, wherein the first segment (40) is a root-side segment of the segmented blade (10), and wherein the second segment (50) is a tip-side segment of the segmented blade (10).

10. A disassembly tool (60) configured for disassembling a segmented blade (10) for a wind turbine (2), the segmented blade (10) including a first segment (40) and a second segment (50), the second segment (50) including a connecting member (54) extending into the first segment (40), the disassembly tool (60) comprising:
- a tool base (66) to be positioned below the connecting member (54) while the connecting member (54) is being removed from the first segment (40); and
- a guiding device (80) connected to the tool base (66), wherein the guiding device (80) comprises a top portion (82) configured to be positioned above the connecting member (54) to limit a mobility of the connecting member (54) while the connecting member (54) is being removed from the first segment (40).

11. The disassembly tool (60) of claim 10, further comprising
- a support device (90) connected to the tool base (66), the support device (90) being configured to be brought into contact with the first segment (40) of the segmented blade (10) while the connecting member (54) is being removed from the first segment (40).

12. The disassembly tool (60) of claim 11, wherein the support device (90) comprises a lifting device (94) and a contact member (92), the lifting device (94) being connected to the tool base (66), and wherein the lifting device (94) is configured for lifting the contact member (92) in a vertical direction relative to the tool base (66).

13. The disassembly tool (60) of any one of claims 10 to 12, wherein the guiding device (80) comprises a height adjustment device (88) for adjusting a height of the top portion (82).

14. The disassembly tool (60) of any one of claims 1 to 13, wherein the guiding device (80) further comprises:
- a lateral portion connecting the tool base (66) and the top portion (82) of the guiding device (80), the lateral portion (86) configured to be arranged laterally with respect to the connecting member (54) while the connecting member (54) is being removed from the first segment (40).

15. A rotor blade set, comprising
- a first segment (40) of a segmented blade (10) for a wind turbine (2);
- a second segment (50) of a segmented blade (10) for a wind turbine (2), the second segment (50) including a connecting member (54) configured to extend into the first segment (40) in an assembled state of the segmented blade (10); and
- the disassembly tool (60) configured for disassembling the segmented blade (10) according to any one of claims 10 to 14.
